# EUROPEAN PATENT SPECIFICATION

(11) **EP 3 862 067 B1**
(45) Date of publication and mention of the grant of the patent: **14.05.2025**
(21) Application number: 20156317.8
(22) Date of filing: 10.02.2020
(51) Int. Cl.: B01D 53/02

(54) **METHOD FOR REMOVING CO2 AND O2**
VERFAHREN ZUR ENTFERNUNG VON CO2 UND O2
PROCÉDÉ D'ÉLIMINATION DE CO2 ET O2

(43) Date of publication of application: 11.08.2021
(73) Proprietor: Clariant Catalysts (Japan) K.K., Tokyo 113-0021 (JP)
(72) Inventor: KIM, HyunJoong, Toyama, 939-2753 (JP); YAMADA, Kazuhiro, Toyama, 939-2753 (JP)
(74) Representative: Clariant Produkte (Deutschland) GmbH

(56) References cited:
- CN-A- 1 301 666
- CN-A- 105 268 441
- US-A1- 2014 000 456
- US-A1- 2019 170 346
- SERRA M ET AL: "Study of preparation conditions of NiO-MgO systems to control the morphology and particle size of the NiO phase", SOLID STATE IONICS, NORTH HOLLAND PUB. COMPANY. AMSTERDAM; NL, NL, vol. 134, no. 3-4, 2 October 2000 (2000-10-02), pages 229 - 239, XP004238091, ISSN: 0167-2738, DOI: 10.1016/S0167-2738(00)00772-4
- GERZELIEV I M ET AL: "Partial oxidation of lower alkanes by active lattice oxygen of metal oxide systems: 2. Synthesis of solid contacts and syngas production in a pilot plant with a riser reactor", PETROLEUM CHEMISTRY, NAUKA/INTERPERIODICA, MO, vol. 52, no. 5, 15 September 2012 (2012-09-15), pages 305 - 312, XP035112771, ISSN: 1555-6239, DOI: 10.1134/S0965544112050039
- GAC ET AL: "Acid-base properties of Ni-MgO-Al"2O"3 materials", APPLIED SURFACE SCIENCE, ELSEVIER, AMSTERDAM , NL, vol. 257, no. 7, 15 January 2011 (2011-01-15), pages 2875 - 2880, XP027585446, ISSN: 0169-4332, [retrieved on 20110105]

## Description

### FIELD OF THE INVENTION

The present invention relates to a method of removing CO₂ and O₂.

### TECHNICAL BACKGROUND OF THE INVENTION

A CO₂/O₂ remover is required for example in a semiconductor manufacturing process where an inert gas atmosphere containing nitrogen, helium or argon is used. Active gas components such as CO₂ and O₂ need to be removed to make the gas inert.

WO2013109895 discloses a CO₂ sorbent, the CO₂ sorbent comprises (i) a magnesium salt, and (ii) at least one salt of a Group IA element wherein (i) said magnesium salt and (ii) said Group IA element salt are present in a molar ratio of from about 8:1 to 3:1.

Gac, W. et al., Applied Surface Science, Elsevier, Amsterdam , NL, 257 (2011) 2875-2880 concerns the preparation of Ni-MgO-Al₂O₃ materials with varying Ni/Mg ratios. Such materials are investigated with respect to their surface area properties by adsorbing and desorbing CO₂ molecules.

### BRIEF SUMMARY OF THE INVENTION

The invention relates to a method of removing CO₂ and O₂ from a gas comprising the steps of: placing a CO₂ and O₂ remover in a container, wherein the CO₂ and O₂ remover comprises 65 to 85 weight percent (wt. %) of a nickel oxide (NiO) and 5 to 20 wt. % of a magnesium oxide (MgO) and 5.9 to 18.3 wt. % of Al₂O₃, wherein the weight ratio of the nickel oxide and the magnesium oxide (NiO/MgO) is 4 to 11, and wherein the wt. % is based on the weight of the CO₂ and O₂ remover; and passing the gas through the container.

CO₂ and O₂ can be sufficiently removed from a gas by the present invention.

### DETAILED DESCRIPTION OF THE INVENTION

The CO₂/O₂ remover and the method of manufacturing thereof are explained below.

The CO₂/O₂ remover comprises 65 to 85 weight percent (wt. %) of a nickel oxide (NiO) and 5 to 20 wt. % of a magnesium oxide (MgO) and 5.9 to 18.3 wt. % of Al₂O₃ based on the weight of the CO₂/O₂ remover. The NiO is 66.5 wt. % or more in an embodiment, 67.5 wt. % or more in another embodiment, 68.5 wt. % or more in another embodiment, 69 wt. % or more in another embodiment, 70.5 wt. % or more in another embodiment, 71.2 wt. % or more in another embodiment, based on the weight of the CO₂/O₂ remover. The NiO is 83.5 wt. % or less in an embodiment, 82.1 wt. % or less in another embodiment, 80.5 wt. % or less in another embodiment, 78.6 wt. % or less in another embodiment, 76 wt. % or less in another embodiment, 74.5 wt. % or less in another embodiment, based on the weight of the CO₂/O₂ remover.

The MgO is 5.5 wt. % or more in an embodiment, 6.2 wt. % or more in another embodiment, 7.5 wt. % or more in another embodiment, 7.9 wt. % or more in another embodiment, 8.9 wt. % or more in another embodiment, 9.9 wt. % or more in another embodiment, 10.5 wt. % or more in another embodiment, based on the weight of the CO₂/O₂ remover.

The MgO is 19.2 wt. % or less in an embodiment, 18.1 wt. % or less in another embodiment, 17.5 wt. % or less in another embodiment, 16.3 wt. % or less in another embodiment, 15.5 wt. % or less in another embodiment, 14.8 wt. % or less in another embodiment, 13.2 wt. % or less in another embodiment, 12.5 wt. % or less in another embodiment, 11.1 wt. % or less in another embodiment, 9.9 wt. % or less in another embodiment, based on the weight of the CO₂/O₂ remover.

The weight ratio of NiO and MgO (NiO/MgO) is 4 to 11. The weight ratio of NiO and MgO (NiO/MgO) is 4.5 or more in an embodiment, 5.1 or more in another embodiment, 5.7 or more in another embodiment, 6.1 or more in another embodiment, 6.9 or more in another embodiment, 7.5 or more in another embodiment, 8.1 or more in another embodiment. The weight ratio of NiO and MgO (NiO/MgO) is 10.5 or less in another embodiment, 9.8 or less in another embodiment, 5.7 or less in another embodiment, 9.0 or less in another embodiment, 8.2 or less in another embodiment, 7.5 or less in another embodiment, 6.8 or less in another embodiment. The CO₂/O₂ remover comprising NiO and MgO within the range at the weight ratio above sufficiently removes both CO₂ and O₂ from a gaseous composition. The CO₂/O₂ remover further comprises one or more of other metal oxide selected from the group consisting of a silicon oxide (SiO₂), a sodium oxide (Na₂O) and a mixture thereof in an embodiment.

The CO₂/O₂ remover comprises SiO₂ in another embodiment. The SiO₂ is 1 wt. % or more in an embodiment, 2.2 wt. % or more in another embodiment, 2.9 wt. % or more in another embodiment, 3.6 wt. % or more in another embodiment, 4.5 wt. % or more in another embodiment, 5.2 wt. % or more in another embodiment, 6.9 wt. % or more in another embodiment, based on the weight of the CO₂/O₂ remover. SiO₂ is 20.0 wt. % or less in an embodiment, 17.2 wt. % or less in another embodiment, 13.5 wt. % or less in another embodiment, 10.3 wt. % or less in another embodiment, 8.5 wt. % or less in another embodiment, 6.4 wt. % or less in another embodiment, 5.2 wt. % or less in another embodiment, based on the weight of the CO₂/O₂ remover.

The CO₂/O₂ remover comprises Al₂O₃. The Al₂O₃ is 5.9 wt. % or more, 7.2 wt. % or more in another embodiment, 9.5 wt. % or more in another embodiment, 10.1 wt. % or more in another embodiment, 11.2 wt. % or more in another embodiment, based on the weight of the CO₂/O₂ remover. The Al₂O₃ is 18.3 wt. % or less, 15.5 wt. % or less in another embodiment, 12.8 wt. % or less in another embodiment, 11.6 wt. % or less in another embodiment, based on the weight of the CO₂/O₂ remover.

The CO₂/O₂ remover comprises an alkali metal oxide in an embodiment. The alkali metal oxide is selected from the group consisting of a sodium oxide (Na₂O), a potassium oxide (K₂O), a lithium oxide (Li₂O) and a combination thereof in another embodiment. The alkali metal oxide comprises a sodium oxide (Na₂O) in another embodiment. The alkali metal oxide is 0.01 wt. % or more in an embodiment, 0.05 wt. % or more in another embodiment, 0.09 wt. % or more in another embodiment, 0.10 wt. % or more in another embodiment, 0.24 wt. % or more in another embodiment, 0.33 wt. % or more in another embodiment, 0.42 wt. % or more in another embodiment, based on the weight of the CO₂/O₂ remover. The alkali metal oxide is 2 wt. % or less in an embodiment, 1.9 wt. % or less in another embodiment, 1.2 wt. % or less in another embodiment, 0.8 wt. % or less in another embodiment, 0.6 wt. % or less in another embodiment, based on the weight of the CO₂/O₂ remover. The CO₂/O₂ remover comprises no alkali metal oxide or Na₂O in another embodiment.

The CO₂/O₂ remover compositions described herein, including those listed in Table 1, are not limiting; it is contemplated that one of ordinary skill in the art of chemistry could make minor substitutions or additional ingredients and not substantially change the desired properties of the CO₂/O₂ remover. For example, substitutions such as oxides of iron (Fe), calcium (Ca), titanium (Ti), cerium (Ce), zinc (Zn), zirconium (Zr) in an amount of 0.001 to 3.0 wt. % based on the weight of the CO₂/O₂ remover may be used either individually or in combination to achieve similar performance. The CO₂/O₂ remover composition can be determined by a fluorescent X-ray analysis (XRF analysis).

The shape of the CO₂/O₂ remover is not limited. The CO₂/O₂ remover can be any shape as long as it generates sufficient removal capacity and strength as a CO₂/O₂ remover. The CO₂/O₂ remover is present in form of particles in an embodiment. The CO₂/O₂ remover has a cylindrical or spherical shape in another embodiment. Cross section of the cylindrical CO₂/O₂ remover is selected from the group consisting of round, ellipse, polygon, rectangle and polylobe in an embodiment. Cross section of the cylindrical CO₂/O₂ remover is round, ellipse or polylobe in another embodiment, polylobe in another embodiment, trilobe in another embodiment.

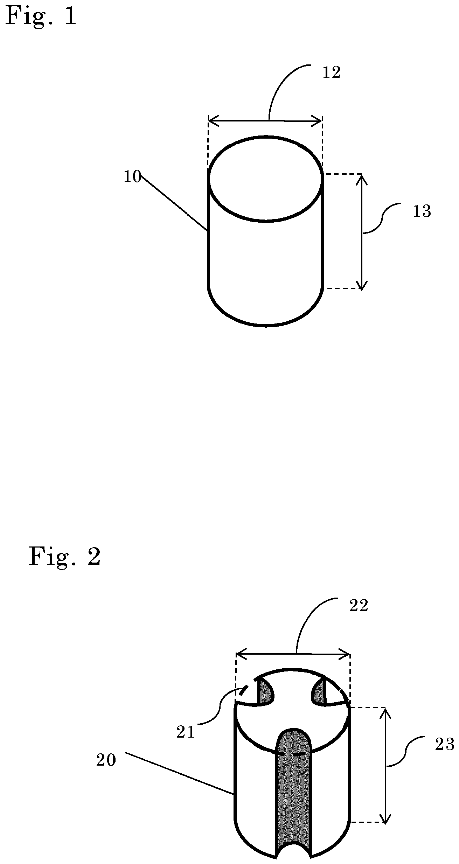

An example of the cylindrical CO₂/O₂ remover 10 having a round cross-section is shown in FIG. 1. Diameter 12 of the cylindrical CO₂/O₂ remover 10 is 0.5 to 10 mm in an embodiment, 0.8 to 8.7 mm in another embodiment, 1 to 5.7 mm in another embodiment, 1.2 to 3.3 mm in another embodiment. Length 13 of the cylindrical CO₂/O₂ remover 10 is 0.5 to 30 mm in an embodiment, 1.2 to 21 mm in another embodiment, 2.5 to 16 mm in another embodiment, 3.2 to 10 mm in another embodiment. The diameter of CO₂/O₂ removers having elliptic rectangular cross-sections is defined as the major axis. For CO₂/O₂ removers having a polylobed or polygon cross-section the diameter is defined as the diameter of the circumcircle. An example of the cylindrical CO₂/O₂ remover 20 with a trilobed cross-section is shown in Fig. 2. The diameter of the cylindrical CO₂/O₂ remover 20 is defined as the diameter 22 of the circumcircle 21 of the trilobe cross-section. The diameter 22 of the trilobe CO₂/O₂ remover 20 is 0.5 to 10 mm in an embodiment, 0.8 to 8.7 mm in another embodiment, 1 to 5.7 mm in another embodiment, 1.2 to 3.3 mm in another embodiment. The length 23 of the trilobe cylindrical CO₂/O₂ remover 20 is 0.5 to 30 mm in an embodiment, 1.2 to 21 mm in another embodiment, 2.5 to 16 mm in another embodiment, 3.2 to 10 mm in another embodiment. The CO₂/O₂ remover is porous in an embodiment. The pore volume is 0.05 mm³/g to 5.0 mm³/g in an embodiment. The pore volume can be measured with an automatic pore size distribution measure instrument for example BELSORP-mini-II from MicrotracBEL Corporation. Surface area (S_{BET}) of the CO₂/O₂ remover is 10 to 1000 m²/g in an embodiment, 32 to 800 m²/g in another embodiment, 58 to 645 m²/g in another embodiment, 68 to 500 m²/g in another embodiment, 80 to 320 m²/g in another embodiment, 85 to 240 m²/g in another embodiment, 100 to 200 m²/g in another embodiment. The surface area could be measured by a BET method (a single-point method) with a N₂ gas absorption at a liquid nitrogen temperature. A surface area analyzer such as Macsorb^{®} Model-1210 from MOUNTECH Co., Ltd. could be used.

The CO₂/O₂ remover is made by a precipitation method or a dry method in an embodiment. A Ni compound, a Mg compound, an Al compound and optionally a Si compound and/or a Na compound are provided. The compounds are mixed and calcined to form the CO₂/O₂ remover. The Al compound can be added to the mixture of the Ni compound and the Mg compound before the step of calcining or after the step of calcining in an embodiment.

For the raw materials of the CO₂/O₂ remover such as the compound of Ni, Mg, Al, Si and Na, any compound which provides the metal oxide thereof after calcination can be used.

The Ni compound could be an oxide, a salt or a mixture thereof. The Ni compound could be selected from the group consisting of a nickel oxide, a nickel nitrate, a nickel nitrite, a nickel hydrosulfate and a combination thereof in an embodiment.

The Mg compound could be an oxide, a salt or a mixture thereof. The Mg compound could be selected from the group consisting of an oxide, a magnesium nitrate, a magnesium nitrite, a magnesium hydrosulfate and a combination thereof in an embodiment.

The Si compound could be selected from the group consisting of a silica, a diatom earth, a sodium silicate and a combination thereof in an embodiment.

The Al compound could be selected from the group consisting of a boehmite, an alumina sol and a combination thereof in an embodiment. The Al compound could also function as a binder for the Ni compound and the Mg compound. As the Al compound could function as a binder of the precipitate, the Al compound could be separately mixed with the precipitate in another embodiment.

The Na compound could be a sodium carbonate in an embodiment.

The metal compounds could be mixed through a precipitation method where a solution dissolving the Ni compound and the Mg compound is prepared in an embodiment. The Ni compound and the Mg compound can be soluble salts, such as nitrates, nitrites and hydrosulfate in another embodiment. The Ni compound is nickel nitrate in another embodiment. The Mg compound is magnesium nitrate in another embodiment. The Si compound and/or the Al compound could be added to dissolve in the solution in another embodiment. The Si compound could be dissolved in the solution in another embodiment. In the precipitation method, the solution can be separately prepared as an acidic solution and an alkaline solution in an embodiment. The acidic solution is prepared by dissolving the Ni compound and the Mg compound in a solution in an embodiment. An alkaline solution is prepared by dissolving the additional metal compound such as a Na compound in a solution in an embodiment. The Si compound could be dissolved in the acidic solution in an embodiment. The acidic solution is incrementally fed to the alkaline solution until the mixed solution indicated about pH 7 in an embodiment. The precipitate is separated from the mixed solution and afterwards calcined.

The solvent is water in an embodiment. The solution is heated at 40° C or higher for 1 hour or more in an embodiment to generate a precipitate. The precipitate was taken out by filtering in an embodiment. The precipitate is fine powder or coarse-particle in an embodiment. The precipitate is optionally mixed with the Si component and/or the Al component in another embodiment.

The metal compound mixture is calcined. The calcination is carried out after the step of shaping the metal compound mixture in another embodiment. The calcination temperature could be 100 to 900° C in an embodiment, 120 to 680° C in another embodiment, 180 to 500° C in another embodiment, 200 to 400° C in another embodiment. The calcination time is 30 minutes or more in an embodiment, 1 hour or more in another embodiment. The calcination time is 5 hours or less in an embodiment, 3 hours or less in another embodiment.

The mixture of the metal compounds can be shaped into a desired form in an embodiment. The shaping method is not limited but in an embodiment the mixture of the metal compounds is shaped by extruding or molding. The shaped metal compound mixture could be calcined in an embodiment. The CO₂/O₂ remover is reduced by exposing to a hydrogen gas in an embodiment. The hydrogen gas is provided with a gas flow at 300 to 550° C for 5 to 30 hours in an embodiment. After the reduction, an oxide layer is formed at the surface of the CO₂/O₂ remover for stabilization by for example exposing to a gas containing O₂ in an embodiment.

In another embodiment, a method of manufacturing a CO₂ and O₂ remover comprises the steps of: mixing a nickel compound and a magnesium compound,
shaping the mixture of the nickel compound and the magnesium compound, and calcining the shaped mixture.

In another embodiment, a method of manufacturing a CO₂ and O₂ remover comprises the steps of: mixing a nickel compound and a magnesium compound,
calcining the mixture of the nickel compound and the magnesium compound, and shaping the calcined mixture.

The CO₂/O₂ remover can be also prepared by a dry method in another embodiment. The Ni compound and the Mg compound are mixed and calcined in another embodiment.

The CO₂/O₂ remover is used any places where CO₂ and O₂ are undesired in an atmosphere. For example, the CO₂/O₂ remover is applied to a gas purification system at a semiconductor manufacturing site.

The method of removing CO₂ and O₂ from a gas comprises the steps of: placing the CO₂ and O₂ remover in a container, and passing the gas through the container in an embodiment. There is no limitation on the kind of the gas. The gas could be selected from a group consisting of nitrogen, helium, argon and a mixture thereof in an embodiment. The CO₂ content in the gas is 1000 ppm or lower in an embodiment, 650 ppm or lower in another embodiment, 400 ppm or lower in another embodiment, 100 ppm or lower in another embodiment. The O₂ content in the gas is 5000 ppm or lower in an embodiment, 3000 ppm or lower in another embodiment, 1500 ppm or lower in another embodiment, 800 ppm or lower in another embodiment. The CO₂/O₂ concentration in the gas after removal is lower than the original gas at any rate. The CO₂ content in the gas after CO₂ removal is 100 ppm or lower in an embodiment, 50 ppm or lower in another embodiment, 30 ppm or lower in another embodiment, 1 ppm or lower in another embodiment, 100 ppb or lower in another embodiment, 50 ppb or lower in another embodiment. The O₂ content in the gas is 1000 ppm or lower in an embodiment, 250 ppm or lower in another embodiment, 80 ppm or lower in an embodiment, 1 ppm or lower in another embodiment, 100 ppb or lower in another embodiment.

### EXAMPLE

### Example 1

The CO₂/O₂ remover was prepared by the following method. An acidic solution was prepared by dissolving 7.5 kg of nickel nitrate hexahydrate, 1.6 kg of magnesium nitrate hexahydrate and 0.3 kg of diatom earth in 14.7 kg of ion-exchanged water. Separately, an alkaline solution was prepared by dissolving 3.9 kg of sodium carbonate in 17.4 kg of pure water. The acidic solution was fed to the alkaline solution until the mixed solution indicated neutrality. The generated precipitate was taken out by filtering and washing. The precipitate was dried and calcinated at 350° C for two hours. The precipitate powder and boehmite were mixed at a weight ratio (precipitate powder:boehmite) of 9:1. The CO₂/O₂ remover was formed by extruding the powder mixture with a vertical extruder. The extruded precursor of the CO₂/O₂ remover had a trilobed cross-section shape as the remover 20 in FIG. 2 with 1.6 mm of diameter 21 and about 7 mm of length 22.

The CO₂/O₂ remover with a bulk volume of 300 cm³ was filled in a quartz tube (40 mm inner diameter and 950 mm long) having an inlet and an outlet. The CO₂/O₂ remover was reduced by exposing to a pure hydrogen gas. Then the hydrogen gas switched to a nitrogen gas at room temperature. Afterwards a nitrogen gas containing oxygen was flown in the tube to stabilize the CO₂/O₂ remover by making the oxide layer at the surface.

The surface area SA_{BET} was 150 m²/g measured by Macsorb^{®} Model-1210 from MOUNTECH Co., Ltd.

The composition of the formed CO₂/O₂ remover was analyzed by a X-ray fluorescence spectrometer (XRF, Supermini-200, RIGAKU Corporation), the result is shown in Table 1.

### Example 2

The CO₂/O₂ remover was formed in the same manner as of Example 1 except that the amount of magnesium nitrate hexahydrate was 2.43 kg, and the amount of the diatom earth was 0.14 kg.

The surface area SA_{BET} was 150 m²/g.

### Comparative Example 1

The CO₂/O₂ remover was formed in the same manner as of Example 1 except that different quantities of raw materials were used resulting in a different chemical composition of the remover. The compositions of the CO₂/O₂ remover are shown in Table 1. The surface area SA_{BET} was 150 m²/g.

### Measurement

### CO₂ removal amount

A quartz tube (inner diameter 20 mm, height 500 mm) was charged with a bulk volume of 40 cm³ of the CO₂/O₂ remover each obtained above. The tube had an inlet at the top and an outlet at the bottom. A reduction was conducted to remove the oxide layer. After the reduction of the CO₂/O₂ remover, a 30 ppm CO₂ gas (CO₂/N₂) flowed from the inlet to the outlet through the CO₂/O₂ remover at a space velocity of about 3,500 h⁻¹. The CO₂ gas flow was stopped when the CO₂ concentration at the outlet increased from zero to 0.5 ppm.

The CO₂ concentration of the outlet gas was measured with a gas chromatograph analyzer with a flame-ionization-detector (FID) and a methanizer (GC-8A/MTN-1, SHIMADZU CORPORATION).

### O₂ removal amount

A 200 ppm O₂ gas (air/N₂) flowed from the inlet to the outlet through the CO₂/O₂ remover at SV of about 3,500 h⁻¹. The O₂ gas flow was stopped when the O₂ concentration at the outlet increased from zero to 7.0 ppm. The O₂ concentration of the outlet gas was measured with a trace oxygen analyzer (Model 1000-RS, Advanced Micro Instruments, Inc.).

The CO₂ absorption and O₂ absorption were calculated by the equations below. CO2 removal (m3/kg)=CO2 gas flow rate (m3/h) x CO2 gas flow time (h) x CO2 concentration 30 ppm/the remover weight (kg) O2 removal (m3/kg)=O2 gas flow rate (m3/h) x O2 gas flow time (h) x O2 concentration 200 ppm / the remover weight (kg)

Results are shown in Table 1 below. The CO₂ removal was sufficiently over 1.6×10⁻³ m³/kg and the O₂ removal was sufficiently over 20×10⁻³ m³/kg in Example (Ex.) 1 and 2. The O₂ removal was insufficiently 14×10⁻³ m³/kg in Comparative Example (Com. Ex.) 1.

**Table 1**

| | Composition (wt. %) | | | | | NiO/MgO | CO₂ removal | O₂ removal |
|---|---|---|---|---|---|---|---|---|
| | NiO | MgO | SiO₂ | Al₂O₃ | Na₂O | | x 10⁻³ m³/kg | x 10⁻³ m³/kg |
| Ex. 1 | 72.8 | 8.2 | 7.6 | 10.8 | 0.5 | 8.8 | 1.6 | 26.6 |
| Ex. 2 | 72.3 | 11.4 | 4.2 | 12.0 | 0.0 | 6.3 | 3.6 | 20.2 |
| Com. Ex. 1 | 63.4 | 15.8 | 8.0 | 12.4 | 0.3 | 4.0 | 4.8 | 14.0 |

## Claims

1. A method of removing CO₂ and O₂ from a gas comprising steps of:
placing a CO₂ and O₂ remover in a container,
wherein the CO₂ and O₂ remover comprises 65 to 85 weight percent (wt. %) of a nickel oxide (NiO),
5 to 20 wt. % of a magnesium oxide (MgO) and 5.9 to 18.3 wt. % of Al₂O₃,
wherein the weight ratio of the nickel oxide and the magnesium oxide (NiO/MgO) is 4 to 11, and
wherein the wt. % is based on the weight of the CO₂ and O₂ remover; and passing the gas through the container.

2. The method of claim 1, wherein the CO₂/O₂ remover further comprises a silicon oxide (SiO₂), an alkali metal oxide or a mixture thereof.

3. The method of claims 1 or 2, wherein the CO₂ and O₂ remover further comprises 1 to 20 wt. % of a silicon oxide (SiO₂) based on the weight of the CO₂ and O₂ remover.

4. The method of any of claims 1 to 3, wherein the CO₂ and O₂ remover further comprises 0.01 to 2 wt. % of an alkali metal oxide based on the weight of the CO₂ and O₂ remover.

5. The method of any of claims 1 to 3, wherein the CO₂ and O₂ remover comprises no alkali metal oxide.

6. The method of any of claims 1 to 5, wherein the specific surface area (S_{BET}) of the CO₂ and O₂ remover is 10 to 1000 m²/g.

## Patentansprüche

1. Verfahren zur Entfernung von CO₂ und O₂ aus einem Gas, das die folgenden Schritte umfasst:
Einbringen eines CO₂₋ und O₂-Entferners in einen Behälter,
wobei der CO₂- und O₂-Entferner 65 bis 85 Gew.-% eines Nickeloxids (NiO) umfasst,
5 bis 20 Gew.-% eines Magnesiumoxids (MgO) und 5,9 bis 18,3 Gew.-% Al₂O₃,
wobei das Gewichtsverhältnis des Nickeloxids und des Magnesiumoxids (NiO/MgO) 4 bis 11 beträgt, und
wobei die Gew.-% auf das Gewicht des CO₂- und O₂-Entferners bezogen sind; und
Durchleiten des Gases durch den Behälter.

2. Verfahren nach Anspruch 1, wobei der CO₂/O₂-Entferner ferner ein Siliziumoxid (SiO₂), ein Alkalimetalloxid oder eine Mischung davon umfasst.

3. Verfahren nach Anspruch 1 oder 2, wobei der CO₂- und O₂-Entferner ferner 1 bis 20 Gew.-% eines Siliciumoxids (SiO₂), bezogen auf das Gewicht des CO₂- und O₂-Entferners, umfasst.

4. Verfahren nach einem der Ansprüche 1 bis 3, wobei der CO₂- und O₂-Entferner ferner 0,01 bis 2 Gew.-% eines Alkalimetalloxids, bezogen auf das Gewicht des CO₂- und O₂-Entferners, umfasst.

5. Verfahren nach einem der Ansprüche 1 bis 3, wobei der CO₂₋ und O₂-Entferner kein Alkalimetalloxid enthält.

6. Verfahren nach einem der Ansprüche 1 bis 5, wobei die spezifische Oberfläche (S_{BET}) des CO₂- und O₂-Entferners 10 bis 1000 m2/g beträgt.

## Revendications

1. Méthode d'élimination du CO₂ et de l'O₂ d'un gaz comprenant les étapes suivantes
placer un éliminateur de CO₂ et d'O₂ dans un récipient,
dans lequel l'éliminateur de CO₂ et d'O₂ comprend 65 à 85 % en poids d'un oxyde de nickel (NiO),
5 à 20 % en poids d'un oxyde de magnésium (MgO) et 5,9 à 18,3 % en poids d'Al₂O₃,
dans lequel le rapport en poids entre l'oxyde de nickel et l'oxyde de magnésium (NiO/MgO) est de 4 à 11, et
dans lequel le pourcentage en poids est basé sur le poids de l'éliminateur de CO₂ et d'O₂; et
faire passer le gaz à travers le récipient.

2. Méthode de la revendication 1, dans laquelle l'éliminateur de CO₂/O₂ comprend en outre un oxyde de silicium (SiO2), un oxyde de métal alcalin ou un mélange de ceux-ci.

3. Méthode des revendications 1 ou 2, dans laquelle l'éliminateur de CO₂ et d'O₂ comprend en outre de 1 à 20 % en poids d'un oxyde de silicium (SiO₂) par rapport au poids de l'éliminateur de CO₂ et d'O₂.

4. Méthode de l'une des revendications 1 à 3, dans laquelle l'éliminateur de CO₂ et d'O₂ comprend en outre 0,01 à 2 % en poids d'un oxyde de métal alcalin par rapport au poids de l'éliminateur de CO₂ et d'O₂.

5. Méthode de l'une des revendications 1 à 3, dans laquelle l'éliminateur de CO₂ et d'O₂ ne comprend pas d'oxyde de métal alcalin.

6. Méthode de l'une des revendications 1 à 5, dans laquelle la surface spécifique (S_{BET}) de l'éliminateur du CO₂ et de l'O₂ est entre 10 et 1 000 m²/g.
